Europäisches Patentamt

European Patent Office

Office européen des brevets

(11) Veröffentlichungsnummer: **0 519 339 A1**

## EUROPÄISCHE PATENTANMELDUNG

(21) Anmeldenummer: **92109893.5**

(22) Anmeldetag: **12.06.92**

(51) Int. Cl.⁵: **B65G 47/64**

(30) Priorität: **15.06.91 DE 4119790**

(43) Veröffentlichungstag der Anmeldung:
**23.12.92 Patentblatt 92/52**

(84) Benannte Vertragsstaaten:
**AT BE CH DE ES FR GB IT LI LU NL**

(71) Anmelder: **PROTECH AUTOMATION GmbH**
**Niederkasseler Strasse 14**
**W-5000 Köln 90(DE)**

(72) Erfinder: **Blöcker, Detlef, Dipl.-Ing.**
**Alter Heeresweg 32**
**W-5330 Königswinter 21(DE)**

(74) Vertreter: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **Umsetzstation für eine Fördervorrichtung.**

(57) Die Umsetzstation weist einen Übergabeförderer
(15) auf, der auf einem Drehteller (23) montiert ist.
Der Drehteller (23) ist von einem Drehantrieb in
einem Winkelbereich von 90° drehbar. Dieser Winkelbereich wird durch Anschlagvorrichtungen (40,41)
begrenzt, welche mit einem Anschlagelement (42)
des Drehtellers zusammenwirken. Jede Anschlagvorrichtung besteht aus einem Stoßdämpfer und einem
Endschalter. Das Anschlagelement (42) ragt durch
eine umfangsmäßig begrenzte Öffnung (43) des
Drehtellers (23) hindurch. Durch eine weitere Öffnung (44) sind Kabel (45) hindurchgeführt.

FIG. 2

Die Erfindung betrifft eine Umsetzstation für eine Fördervorrichtung und insbesondere für solche Fördervorrichtungen, die Werkstückträger auf mindestens einem Hauptförderer transportieren, wobei an Verzweigungsstellen eine Übergabe der Werkstückträger auf einen oder mehrere Hauptförderer möglich ist.

Bei Montagemaschinen, die zur Bildung einer Montagelinie gegeneinandergesetzt werden, werden Werkstückträger auf Hauptförderern transportiert. Die Werkstückträger mit darauf befindlichen Werkstücken werden an Bearbeitungsstationen angehalten und anschließend weiterbefördert. Dabei kann es erforderlich sein, Abzweigungen von einem Hauptförderweg vorzunehmen und beispielsweise einige Werkstückträger nach rechts oder nach links abzuzweigen, während andere Werkstückträger geradeaus weiterlaufen sollen. Für solche Abzweigungen sind Umsetzstationen erforderlich, die einen oder mehrere Werkstückträger von dem Zuförderer übernehmen und auf einen der abzweigenden Hauptförderer weiterleiten.

DE 38 30 194 C2 beschreibt eine Umsetzstation mit einem von einem Drehantrieb antreibbaren Drehteller, der einen eigenen Übergabeförderer aufweist. Der Drehteller ist auf einer Basisplatte drehbar gelagert und er kann von seinem Drehantrieb endlos angetrieben werden, so daß er beliebig viele Winkelschritte von 90° in derselben Drehrichtung nacheinander durchführen kann. Der Laufantrieb des Übergabeförderers ist über Winkelgetriebe mit dem Laufantrieb des angrenzenden Hauptförderers derart gekoppelt, daß der Übergabeförderer in jeder Drehstellung des Trägers angetrieben werden kann. Dies setzt eine komplizierte Antriebsmechanik voraus.

Wenn der Übergabeförderer einer Umsetzstation einen auf dem Träger befestigten und sich mit diesem mitdrehenden Laufantrieb hat, so müssen für die Energiezufuhr zum Laufantrieb Schleifringe oder andere Drehkupplungen vorgesehen sein, die die Energiezufuhr bei jeder Drehstellung des Trägers ermöglichen. Beim Vorhandensein durchgehender Kabel oder Leitungen würden diese sich aufwickeln. Entsprechendes gilt auch für die Leitungen von Schaltern und Sensoren, die auf dem Drehteller angeordnet sind. Die Versorgung und der Signaltransport solcher Elemente erfordert ebenfalls Kupplungen für den Übergang zwischen dem drehenden Träger und den ortsfesten Teilen der Umsetzstation.

Aus US-PS 4 349 097 ist ein auf Schienen verfahrbares Gestell bekannt, auf dem zwei parallele Endlosgurte gemeinsam ein Förderband bilden. Das Förderband ist auf einem drehbaren Tisch angeordnet, der u.a. 90°-Drehungen in beide Richtungen ausführen kann, und ankommendes Fördergut wahlweise rechtwinklig nach der einen oder der anderen Seite umlenkt. Der Drehtisch wird über eine an seiner Achse umfangsmäßig angeordnete Verzahnung mittels einer Kette von einem Zahnrad angetrieben, welches über ein auf einer gemeinsamen Welle angeordneten Reibrad von einem zweiten Reibrad betätigt wird. Dieses zweite Reibrad wird dem ersten Reibrad radial zugestellt und über einen Elektromotor angetrieben. Spiel der Kette, Schlupf der Reibräder und Kriechverhalten des Motors begünstigen ggfs. Ungenauigkeiten in der Positionierung. Es ist erforderlich, mit Hilfe von Sensoren, Grenzschaltern und dergleichen die exakte Position des Drehtischs festzuhalten und über eine Steuerung weiter zu verarbeiten. Aufgrund der Möglichkeit, den Drehtisch mehrfach um die Drehachse zu rotieren, ist es notwendig, aufwendige, z.B. schleifende, Kontakte zu verwenden, um ein Aufwickeln der Kabel zu vermeiden.

Aus AT 0 144 024 B1 ist ein Drehtisch mit einem Kettenförderer bekannt, der über eine Kurbelstange angetrieben wird und vorzugsweise eine Viertelumdrehung ausführt. Durch Anschläge für die Kurbelstange ist der Winkel, den der Drehtisch ausführt, einstellbar. Der Drehtisch vollzieht lediglich die Umlenkung des Förderguts in eine Richtung senkrecht zum ankommenden Fördergut; um Fördergut auch in die andere senkrechte Richtung zu fördern, wäre es notwendig, zwei derartige Drehtische hintereinander anzuordnen.

Aus DE-AS-12 96 093 ist eine Übergabeeinrichtung für Bandförderer bekannt, die aus zwei auf einem Drehtisch angeordneten, T-formig zusammengestellten breiten Endlosförderern besteht. Ein kurzes Zuführförderband ist dabei mittig und senkrecht zu einem Abführförderband angeordnet, wobei die Länge des Abführförderbandes etwa dem Durchmesser des Drehtisches entspricht. Der Drehtisch läßt sich um seinen gesamten Umfang drehen. Zum Umsetzen von Fördergut um 90° wird es vom Zuführförderband auf das reversibel angetriebenen Abführförderband übergeben, so daß eine Drehung des Drehtisches zur Übergabe nicht erforderlich ist. Eine Drehung des Tisches erfolgt nur dann, wenn die Förderrichtung der durch den Drehtisch verknüpften An- und Abförderer geändert wird. Für den Übergabevorgang selbst ist keine Drehbewegung vorgesehen. Beide Bandförderer arbeiten kontinuierlich, so daß eine exakte Positionierung des Förderguts bei der Übergabe nicht möglich ist. Eine Umkehrung der Förderrichtung durch umgekehrten Förderablauf ist nicht möglich. Ferner ist nachteilig, daß Stirn- und Seitenflächen des Förderguts im Falle einer Querübergabe vertauscht werden. Darüberhinaus ist auch hier eine aufwendige Kontaktierung der Elektroverbindungen notwendig.

Der Erfindung liegt die Aufgabe zugrunde, eine Umsetzstation zu schaffen, die das Umsetzen von Werkstückträgern von einem ankommenden Hauptförderer in drei rechtwinklig zueinander stehende abgehende Richtungen ermöglicht und dabei einen einfachen mechanischen Aufbau hat, wobei insbesondere die Energie- und Signalübertragung für auf dem drehbaren Träger montierte Komponenten vereinfacht ist.

Die Lösung dieser Aufgabe erfolgt erfindungsgemäß mit den im Patentanspruch 1 angegebenen Merkmalen.

Bei der erfindungsgemäßen Umsetzstation ist der Träger nur in einem Winkelbereich von 90° drehbar und der Laufantrieb des Übergabeförderers ist reversierbar. Damit ist es möglich, gegenüber einer ankommenden Laufrichtung eine Umlenkung um 90° nach rechts und nach links durchzuführen. Bei einer Umlenkung nach rechts wird der Übergabeförderer in der einen Laufrichtung angetrieben und bei der Abzweigung nach links in der entgegengesetzten Laufrichtung. Wenn die Werkstückträger geradeaus durchlaufen sollen, erfolgt keine Drehung des Trägers.

Da der Drehbereich des Trägers durch die Anschlagvorrichtungen auf exakt 90° begrenzt ist, können Kabel oder Leitungen unmittelbar, d.h. ohne Schleifringe und Drehkupplungen, umittelbar von den ortsfesten Komponenten mit den auf dem Träger befindlichen Komponenten verbunden werden, so daß ein direkter Anschluß möglich ist und nicht die Gefahr besteht, daß Leitungen sich aufwickeln. Der Laufantrieb für den Übergabeförderer befindet sich auf dem Träger und dreht sich mit diesem. Ebenfalls auf dem Übergabeförderer können Sensoren, steuerbare Stopper und andere Hilfskomponenten angeordnet sein, die über Leitungen mit ortsfesten Komponenten verbunden werden. Die Drehung des Trägers erschöpft sich in Hin- und Herbewegungen über jeweils 90°. Während dieser Bewegungen steht der Übergabeförderer vorzugsweise still.

Die Beendigung einer 90°-Drehbewegung wird dadurch angezeigt, daß an der Anschlagvorrichtung ein Endschalter betätigt wird. Der Endschalter setzt den Übergabeförderer in Betrieb, der dann den Werkstückträger von der Umsetzstation an den übernehmenden Hauptförderer abgibt. Durch die Endschalter wird sichergestellt, daß der Übergabeförderer erst dann angetrieben wird, wenn er sich in exakter Ausrichtung mit dem übernehmenden Hauptförderer befindet. Die Anschlagvorrichtungen in Verbindung mit den Endschaltern bewirken, daß die jeweils anzufahrende Drehposition mit großer Genauigkeit eingenommen wird. Da die Drehbewegung des Trägers durch die Anschlagvorrichtungen zwangsweise beendet wird, kann kein Nachlaufen des Trägers stattfinden. Es ist auch keine aufwendige Schrittsteuerung der Drehbewegung erforderlich. Der Drehantrieb des Trägers braucht lediglich in der gewünschten Richtung eingeschaltet zu werden und der Träger vollzieht dann mit großer Geschwindigkeit die 90°-Drehung, die er zwangsweise beendet, wenn ein Anschlagelement gegen die betreffende Anschlagvorrichtung stößt. Das Anstoßen gegen diese Anschlagvorrichtung und die Einnahme der exakten Drehposition des Trägers wird durch die Betätigung des Endschalters angezeigt.

Zweckmäßigerweise ist jeder Endschalter mit einem Stoßdämpfer gekoppelt, der in der Endphase der Drehbewegung des Trägers dessen Abbremsung vornimmt. Der Stoßdämpfer verhindert ein hartes Anschlagen und vermindert somit den Verschleiß. Eine andere Funktion des Stoßdämpfers besteht darin, ein Zurückprallen des Trägers zu vermeiden. Wenn der Träger das Ende einer 90°-Drehung erreicht, wird er zunächst von dem Stoßdämpfer abgebremst. Erst am Ende der Stoßdämpferbewegung wird der Endschalter betätigt. Der Drehantrieb kann auch anschließend eingeschaltet bleiben, wodurch der Stoßdämpfer im eingedrückten Zustand gehalten und der Endschalter betätigt bleibt. Der Endschalter bewirkt, daß der Laufantrieb des Übergabeförderers nur dann wirksam gemacht werden kann, wenn der Träger mit dem Übergabeförderer sich in einer der beiden Endstellungen befindet.

Die erfindungsgemäße Umsetzstation ist von einfachem und robustem Aufbau. Sie ist wenig verschleißanfällig und bewirkt das Umsetzen in sehr kurzer Zeit.

Im folgenden wird unter Bezugnahme auf die Zeichnungen ein Ausführungsbeispiel der Erfindung näher erläutert.

Es zeigen:

Fig. 1 eine Draufsicht auf eine Fördereinrichtung mit mehreren Umsetzstationen,

Fig. 2 eine Draufsicht auf eine der Umsetzstationen,

Fig. 3 eine Stirnansicht aus Richtung der Pfeile III-III von Fig. 2,

Fig. 4 einen Schnitt entlang der Linie IV-IV von Fig. 3 und

Fig. 5 in vergrößertem Maßstab einen Schnitt entlang der Linie V-V von Fig. 2.

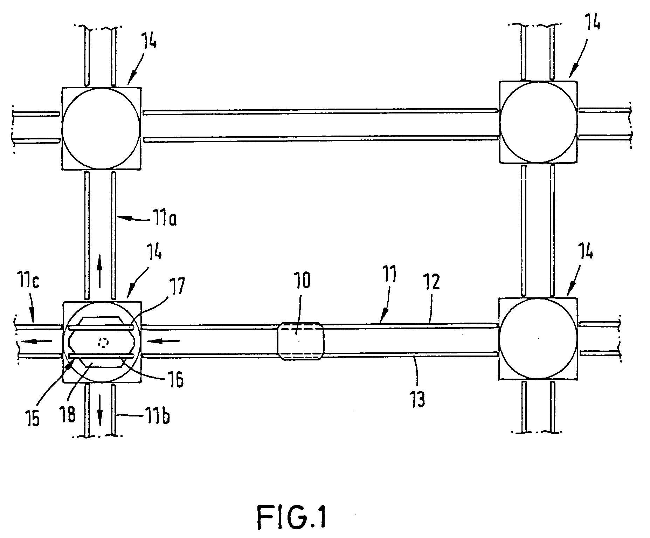

Die in Fig. 1 dargestellte Fördervorrichtung dient zur Förderung von Werkstückträgern 10 entlang vorgesehener Förderwege. Auf jedem der Werkstückträger 10 kann ein zu bearbeitendes Werkstück angebracht werden.

Die Fördervorrichtung besteht aus mehreren Hauptförderern 11, die als Duplexförderer ausgebildet sind. Dies bedeutet, daß jeder Hauptförderer 11 zwei parallele endlose Förderbänder 12,13 aufweist, auf deren Obertrume die Seitenränder der Werkstückträger 10 aufgelegt werden. Die Werkstückträger 10 werden dann von den synchron laufenden Förderbändern 12,13 transportiert.

Im Fall von Fig. 1 wird der Werkstückträger 10 einer Umsetzstation 14 zugeführt, die einen eigenen Übergabeförderer 15 aus zwei kurzen Förderbändern 16,17 aufweist. Dieser Übergabeförderer 15 ist auf einem um eine vertikale Achse drehbaren Träger 18 oder Drehteller montiert.

In der dargestellten Drehposition des Trägers ist der Übergabeförderer in Bezug auf den ankommenden Hauptförderer 11 ausgerichtet. Der Werkstückträger 10 (oder mehrere solcher Werkstückträger) wird auf den laufenden Übergabeförderer 15 übernommen und auf diesem angehalten. Dann wird der Träger 18 um 90° gedreht, so daß der Übergabeförderer 15 mit den Hauptförderern 11a und 11b ausgerichtet wird, die rechtwinklig zu dem Hauptförderer 11 verlaufen. Nun kann der Übergabeförderer 15 entweder in Vorwärtsrichtung angetrieben werden, so daß der Werkstückträger auf den Hauptförderer 10a übergeben wird, oder in Rückwärtsrichtung, so daß der Werkstückträger auf den entgegengesetzten Hauptförderer 11b übergeben wird.

In Verlängerung des Hauptförderers 11 ist noch ein weiterer Hauptförderer 11c vorgesehen, auf den der Übergabeförderer 15 die Werkstückträger ohne Drehung des Trägers 18 übergeben kann.

Wie Fig. 1 zeigt, können in einem Fördersystem zahlreiche solcher Umsatzstationen 14 an Kreuzungs- oder Verzweigungsstellen von Hauptförderern angeordnet sein.

Die Umsetzstation 14 weist einen Tisch 20 auf, auf dem eine Basisplatte 21 mit Ständern 22 ortsfest montiert ist. Über der Basisplatte 21 befindet sich der Drehteller oder drehbare Träger 23, der als Platte ausgebildet ist und der mit einem Wälzlager 24 an der Basisplatte 21 gelagert ist. Unter der Basisplatte 21 ist der Drehantrieb 25 für den Träger 23 montiert. Die Ausgangswelle des Drehantriebs 25 ist mit dem am Träger 23 befestigten Schaft 26 fest verbunden. Der Drehantrieb 25 ist ein Druckluftmotor, der hier als Drehmotor ausgebildet ist, jedoch könnte ebenfalls ein Linearmotor benutzt werden.

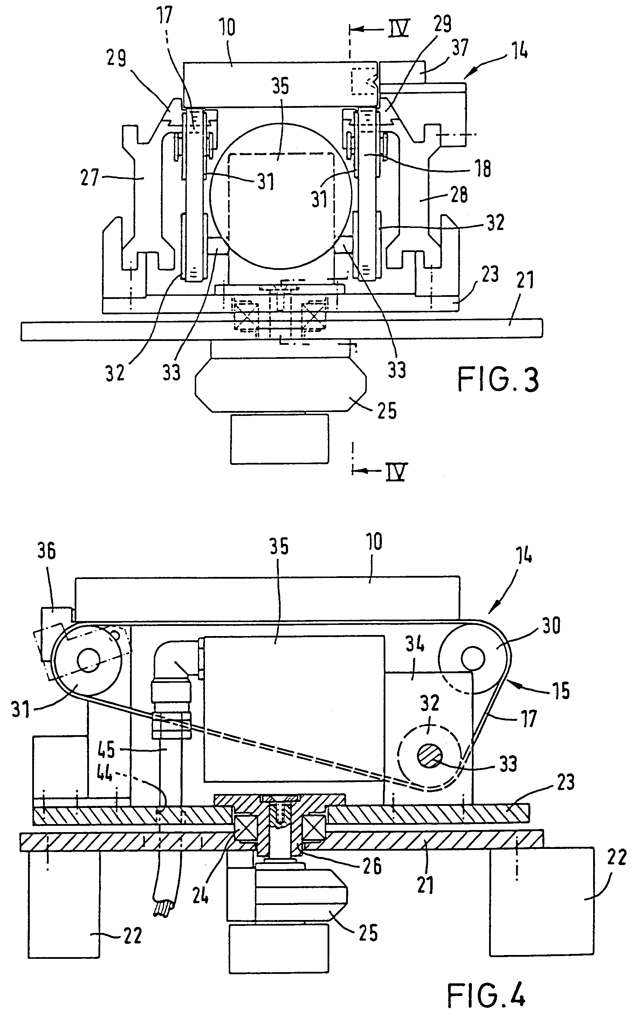

Der Übergabeförderer 15 weist zwei parallele Profilleisten 27,28 auf, die auf dem Träger 23 montiert sind und die an den einander zugewandten Seiten jeweils eine Gleitschiene 29 für den Obertrum des entsprechenden Förderriemens 17 bzw. 18 aufweisen. Diese Profilleisten 27 und 28, die die Obertrume der Förderbänder 17 und 18 abstützen, sind aus Gründen der Übersichtlichkeit in Fig. 4 fortgelassen. Jedes der Förderbänder des Übergabeförderers 15 läuft über zwei Umlenkrollen 30,31 und eine Antriebsrolle 32. Die Antriebsrollen 32 werden von den in entgegengesetzten Richtungen abstehenden Wellen 33 eines Getriebes 34 synchron angetrieben. Das Getriebe 34 wird seinerseits von dem Laufantrieb 35 angetrieben, der beispielsweise ein Elektromotor oder ein Druckluftmotor sein kann. Der Laufantrieb 35 ist auf dem Träger 23 montiert.

Auf dem Träger 23 ist ferner eine kippbare Stoppvorrichtung 36 angebracht, die zwischen den Förderbändern 16 und 17 angeordnet ist und gegen die der Werkstückträger 10 gemäß Fig. 4 aufläuft. Die Stoppvorrichtung 36 kann zum Freigeben des Transportes des Übergabeförderers heruntergeklappt werden.

Ferner ist seitlich neben dem Übergabeförderer 15 ein Sensor 37 angebracht, der das Vorhandensein eines Werkstückträgers auf dem Übergabeförderer 15 erkennt und daraufhin die Drehung des Trägers 23 einleitet.

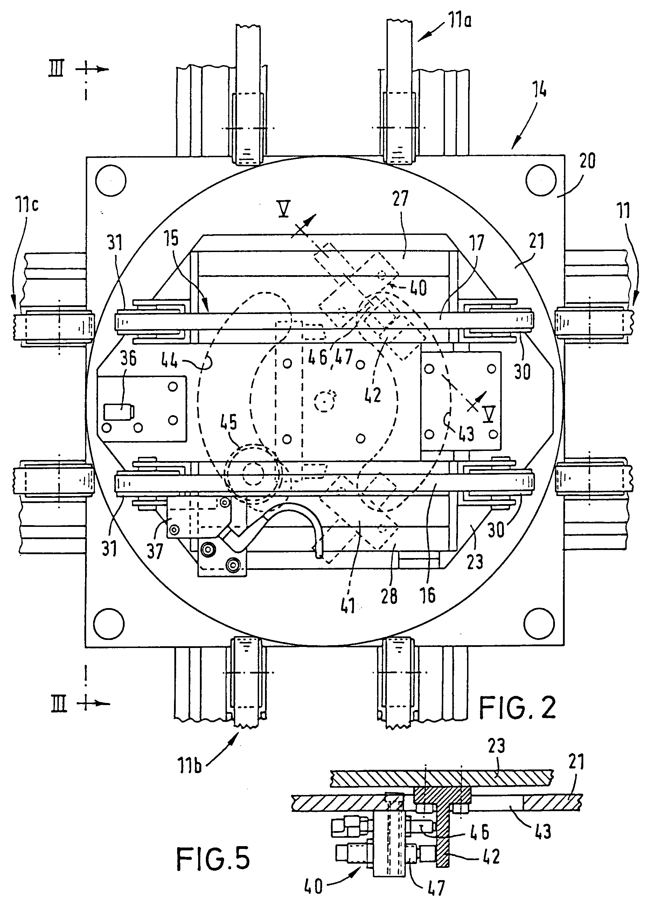

An der Unterseite der Basisplatte 21 sind gemäß Fign. 2 und 5 zwei Anschlagvorrichtungen 40 und 41 montiert, gegen die ein an der Unterseite des Trägers 23 befestigtes Anschlagelement 42 stoßen kann. Die Anschlagvorrichtungen 40 und 41 sind so angebracht, daß das Anschlagelement 42 gegen die Anschlagvorrichtung 40 stößt, wenn der Übergabeförderer 15 in Bezug auf den Hauptförderer 11 ausgerichtet ist, und daß das Anschlagelement 42 gegen die Anschlagvorrichtung 41 stößt, wenn der Übergabeförderer 15 genau rechtwinklig zum Hauptförderer 11 ausgerichtet ist bzw. sich in Ausrichtung mit den Förderern 11a und 11b befindet. Der zwischen den Anschlagvorrichtungen 40 und 41 mögliche Drehbereich des Trägers 23 erstreckt sich somit über einen Winkel von genau 90°.

Das Anschlagelement 42 ragt durch eine bogenförmige Öffnung 43 der Basisplatte 21 hindurch nach unten. Jede Anschlagvorrichtung 40 weist einen Stoßdämpfer 46 und einen Endschalter 47 auf, die parallel zueinander angeordnet sind. Zuerst stößt das Anschlagelement 42 gegen den Stoßdämpfer 46, der die Drehbewegung des Trägers bremst. Am Ende des Auffangweges des Stoßdämpfers 44 wird der Endschalter 47 von dem Anschlagelement 42 betätigt. Durch die Betätigung des Endschalters 45 wird die Stoppvorrichtung 36 heruntergeschwenkt, so daß sie den Transport des Werkstückträgers vom Übergabeförderer 15 auf einen angrenzenden Hauptförderer freigibt.

Während ein Werkstückträger sich auf dem Übergabeförderer 15 befindet, kann der Laufantrieb 35 weiterlaufen. In diesem Fall bewegen sich die Förderbänder 17 und 16 unter dem Werkstückträger hindurch, der von der Stoppvorrichtung 36 angehalten wird. Es ist aber auch möglich, den Hauptförderer 15 insgesamt stillzusetzen. Wichtig ist, daß die Freigabe des Transports des Übergabeförderers durch den Endschalter 47 immer dann erfolgen kann, wenn der Übergabeförderer 15 in Bezug auf die Richtung eines angrenzenden Hauptförderers exakt ausgerichtet ist.

Der Drehantrieb 25 treibt das Anschlagelement 42 gegen den Stoßdämpfer 46, der daraufhin langsam nachgibt, bis schließlich der Endschalter 47 betätigt wird. Wenn dies geschieht, wird der Drehantrieb 25 jedoch nicht stillgesetzt, sondern er bleibt weiter eingeschaltet, wodurch der Stoßdämpfer 46 eingedrückt bleibt und der Endschalter 47 betätigt bleibt. Wenn der Träger 23 um 90° gedreht werden soll, wird die Drehrichtung des Drehantriebs 25 umgekehrt. Das Anschlagelement 42 löst sich dann von dem Stoßdämpfer 46 und von dem Endanschlag 45. Der Stoßdämpfer 46 kehrt unter der Wirkung einer Feder in den ausgefahrenen Zustand zurück.

Die Anschlagvorrichtung 41 ist in gleicher Weise ausgebildet wie die Anschlagvorrichtung 40. Die Signale der Endschalter 47 beider Anschlagvorrichtungen werden einem Mikroprozessor zugeführt, ebenso wie die Signale des Sensors 37. Der Mikroprozessor steuert die Laufrichtungen der Hauptförderer und des Übergabeförderers 15 sowie die Stoppvorrichtung 36 und den Drehantrieb 25.

In der Basisplatte 23 ist um 180° versetzt gegenüber der Öffnung 43 eine weitere Öffnung 44 vorgesehen, die sich ebenfalls über einen Winkelbereich von 90° erstreckt und durch die die Versorgungsleitung 45 für den Laufantrieb 35 sowie andere Kabel hindurchgeführt sind, welche auf dem Träger 23 befestigte Komponenten mit unterhalb der Basisplatte 21 vorgesehenen ortsfesten Komponenten verbinden.

**Patentansprüche**

1. Umsetzstation für eine Fördervorrichtung, mit einem drehantreibbaren Träger (23), der einen laufangetriebenen reversierbaren Übergabeförderer (15) trägt, um Werkstückträger (10) von einem ankommenden Hauptförderer (11) zu übernehmen und wahlweise rechtwinklig nach der einen oder der anderen Seite umzulenken,

   **dadurch gekennzeichnet,**

   daß der Drehbereich des Trägers (23) durch Anschlagvorrichtungen (40,41) auf 90° beschränkt ist und daß die Richtung des Laufantriebs des Übergabeförderers (15) in Abhängigkeit davon gesteuert ist, nach welcher Seite der Werkstückträger umgelenkt werden soll.

2. Umsetzstation nach Anspruch 1, dadurch gekennzeichnet, daß jede Anschlagvorrichtung (40,41) einen Endschalter (45), der nur im betätigten Zustand den Transport des Übergabeförderers (15) freigibt.

3. Umsetzstation nach Anspruch 2, dadurch gekennzeichnet, daß jede Anschlagvorrichtung (40,41) einen Stoßdämpfer (44) aufweist, wobei die Betätigung des Endschalters (45) erst am Ende des Dämpfungsweges erfolgt.

4. Umsetzstation nach Anspruch 2 oder 3, dadurch gekennzeichnet, daß der Drehantrieb (25) ein Druckluftantrieb ist, der auch bei angehaltenem Träger (23) den Endschalter (45) im betätigten Zustand hält.

5. Umsetzstation nach einem der Ansprüche 1 - 4, dadurch gekennzeichnet, daß der Träger (23) über einer Basisplatte (21) drehbar montiert ist, welche eine sich im Bogensegment von etwa 90° erstreckende Öffnung (43) aufweist, und daß ein an der Unterseite des Trägers (23) befestigtes Anschlagelement (42) durch die Öffnung (43) ragt und mit den unter der Basisplatte (21) montierten Anschlagvorrichtungen (40,41) zusammenwirkt.

6. Umsetzstation nach Anspruch 5, dadurch gekennzeichnet, daß der Träger (23) eine weitere umfangsmäßig begrenzte Öffnung (44) für den Durchtritt von Leitungen und/oder Kabeln (45) aufweist.

FIG.1

FIG. 2

FIG. 5

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | GB-A-1 396 545 (T. & B. ENGINEERING) <br> * das ganze Dokument * <br> --- | 1,2 | B65G47/64 |
| Y | GB-A-1 389 820 (TORVALE HOLDINGS) <br> * das ganze Dokument * <br> ----- | 1,2 | |

**RECHERCHIERTE SACHGEBIETE (Int. Cl.5 )**

B65G

Der vorliegende Recherchenbericht wurde für alle Patentansprüche erstellt

| Recherchenort | Abschlußdatum der Recherche | Prüfer |
|---|---|---|
| DEN HAAG | 17 SEPTEMBER 1992 | OSTYN T.J.M. |